# EUROPEAN PATENT APPLICATION

(11) **EP 1 854 775 A1**
(43) Date of publication of application: **14.11.2007**
(21) Application number: 06725766.7
(22) Date of filing: 16.02.2006
(51) Int. Cl.: C05F 17/00, C05F 3/00

(54) **COMPOST-PRODUCTION METHOD**

(30) Priority: 28.02.2005 ES 200500442 P
(71) Applicant: AgroTech Biotecnologia Aplicada S.A., 08500 Barcelona (ES)
(72) Inventor: TURET CAPELLAS, Josep, E-08500 Vic, Barcelona (ES)
(74) Representative: Gallego Jiménez, José Fernando
(86) International application number: PCT/ES2006/000067
(87) International publication number: WO 2006/092452

(57) **Abstract**

The invention relates to a compost-production method. The invention consists of an aerobic microbiological process involving the decomposition of organic material comprising purines and manure in a intensive composting module (14) into, inter alia, CO₂, water vapour and mineral salts. The inventive method comprises the following phases consisting in: mixing (11) the purines (1) in situ with one more of the following products, namely manure (2), porous and hygroscopic substances (3) and a sponging agent (4), in order to obtain a spongy air-permeable mixture (5); placing the mixture (5) thus obtained in a compositing pile (12) constructed inside an intensive compositing module (14); in the decomposition and hygienisation stage, compositing the mixture intensively in the composting module, with the production of a hygienised pre-compost (7) and a leachate (6); recirculating (15) all or part of the leachate (6) to the compositing module (14); emptying the compositing module at a maturation station (17); and maturing and controlling the hygienized pre-compost for a pre-determined period of time in order to obtain a mature compost (8) or end product.

## Description

### TECHNICAL FIELD OF THE INVENTION

The present invention relates to a process for the production of compost, made from residual purines and other farm animals droppings, that includes the aerobic decomposition in a composting module of the organic material of the purines and of the other components of the mixture undergoing treatment, in which this is transformed by means of the exchange of air, among others compounds, in CO₂, water vapour and mineral salt ions.

### PRIOR ART

The arrangement of purines produced on farms is becoming an environmental problem of great magnitude and importance.

In effect, farm droppings, known as purines and manure, from poultry, cattle, sheep, bovine and mainly pig farms, contain high proportions of nitrogen and pose an enormous potential risk of pollution to the atmosphere and water supply. In Europe, this is already evidently noticeable in some regions of countries such as Holland, France and Spain, where the level of pig livestock is very high.

At present the arrangement or recovery of these residues is subject to different alternative solutions, such as its recovery as an energy source or its use as stabilised organic fertilizer. Composting is one of the techniques used for this recovery and consists in controlled biodegradation, under aerobic conditions, of the organic material of the residues, such as the purine and manure, in which said material is transformed in CO₂, water vapour, mineral salt ions, humic and fulvic acids, etc. The resulting product, or compost, can be used as fertilizer in farming, obviously under controlled conditions with respect to nitrogen concentration and other parameters.

This exploitation system depends greatly on the availability of vegetable crops on which the compost or the fertilizers derived from it could ideally be used. In this way, it is clear that for the management of the purines by means of composting to be efficient, above all in those areas vulnerable to or already damaged by contamination originating from said purines, it is necessary to implement a system for the production of high quality composts that is in proportion with farming needs, in such a way as to ensure their sale outside the area having a surplus and in order to re-establish the difficult balance between the production of purines and manure from cattle farms with crop farmlands, thus achieving its present and future sustainability.

At present there are a number of embodiments for treatment processes and installations with the same purpose, mainly implemented in composting plants, cogeneration plants, etc. These processes or installations, however, rely on the construction of large plants (which leads to the need for heavy investment), many of the which end up being difficult to sustain due to low profitability and the high operating costs involved. As an example, we can look at a cogeneration plant, the profitability of which depends largely on public administration subsidies and that may experience significant operating difficulties when the administrations reduce the fees paid to the cogenerators for each unit of energy produced.

Another drawback suffered by the techniques for the aerobic treatment of cattle droppings by means of current composting is that they use, almost without exception, one or several agitation stages of the composted product, which produces odours and diffuses contamination into the atmosphere.

The most common occurrence is that the cattle droppings are transported from the farm where they are produced to the purine treatment plant. This causes a first additional problem derived from the economic cost of the transport, since a very high percentage of the content of the droppings is water, which in the purines reaches ratios of 92 to 98%, as well as the equally important health and environmental problem derived from the transport of undoubtedly contaminant and insalubrious residues.

Residues with very different origins are mixed in the treatment plant and this stage is carried out by means of the more or less suitable homogenisation of the livestock residue with materials that have very different characteristics. This treatment is normally carried out exclusively with solid droppings (manure) or with separated solid fractions of the purines, but not directly with purines.

On the other hand, the composting process typically has two stages: a first stage consisting in decomposition and hygienisation and second stage consisting in maturation, which must be developed correctly and during the time necessary for the obtainment of high quality products. The first stage is often carried out in an irregular way and furthermore the maturation stage is carried out in the minimum time possible, in both cases to contain economic costs. On the whole, this gives rise to a lack of uniformity in the end product and the obtainment of composts and fertilizers of low and very variable quality.

### SUMMARY OF THE INVENTION

The problems and drawbacks indicated previously are resolved with the present invention, for which, the object of this invention is a method for the production of compost, made from residual purines and other animals droppings from cattle farms, that includes an aerobic microbiological process for decomposing the organic material of the purines and droppings in an intensive composting module, among other compounds, in CO₂, water vapour and mineral salts. Essentially, the method according to the invention is characterised in that it comprises the stages of:
mixing the purines with one or several of the following products: manure, hygroscopic and porous substances and a sponging agent for the obtainment of a spongy air-permeable mixture.
arranging the mixture thus obtained in a composting pile constructed in the interior of an intensive composting module;
in the decomposition and hygienisation phase, composting the mixture intensively in the composting module, with the production of a hygienised pre-compost and a leachate;
recirculating all or part of the leachate to the composting module;
emptying the composting module at a maturation site;
maturing and controlling the hygienised pre-compost for a pre-determined period of time in order to obtain a matured compost or end product.
   The mixing stage will preferably take place *in situ* at the cattle farm itself.

According to another characteristic of the invention, composting comprises the acceleration of microbiological decomposition activity in said intensive composting module.

Acceleration is produced by means of the controlled injection of air through the air-permeable spongy mixture being composted.

In this case, the method includes the stage of covering the product in progress in the composting module with a layer of biological filter.

The biological filter can comprise the hygienised pre-compost itself or the mature compost or end product itself.

The biological filter includes bacteria that develop in the particles of the material that forms the biofilter and that are useful as their activity serves to degrade and metabolise an entire set of molecules that produce unpleasant odours.

In order to protect the pile in the module from precipitation and, at the same time, to provide the system with a second condensation filter for the air emitted from insufflation, it is possible to cover the product in progress in the composting module and the biological filter layer temporarily with a polyester awning treated with Teflon® so that it is impermeable to water and can transpire, at the same time, the water vapour from the process.

The injection of air is preferably controlled by computer programmable means, adapted to act on the airflow. This control comprises the use of sensors connected to said computer means.

According to another characteristic of the invention, the method includes the control of the composting temperature of the mixture in the composting module.

The leachates produced in this stage of the process are taken to a storage tank and are recirculated and distributed periodically in the composting module pile, in such a way that they redistribute bacteria throughout the mass being processed and, moreover, they are gradually transformed into a highly concentrated liquid fertiliser or are even assimilated by the solid mass being composted.

In accordance with another characteristic of the invention, the method includes two possible recirculation steps:
- a possible recirculation step of the hygienised pre-compost of the leachate sediment from the composting module to the composting pile upstream of the composting module; and
- a possible recirculation step of the matured compost or end product to the composting pile upstream of the composting module.

The process phases can be carried out according to a continuous process, at least partially, or according to a batch process, which is the most common.

According to a preferred embodiment of the invention, the hygroscopic and porous substance includes sawdust and the mixture is carried out with a purine:sawdust mass ratio comprised between 6:1 and 20:1 and, more preferably, with a purine:sawdust mass ratio comprised between 8:1 and 10:1.

The method can comprise a sifting stage of the matured compost or end product, according to the desired final characteristics, and a stage to transport the matured compost or end product, sifted or not, to an organic fertiliser product manufacturing plant.

Preferably, the data implicit in the accelerated composting stage for the manufacture of hygienised pre-compost is controlled and monitored remotely.

Specifically, according to that mentioned, the hygroscopic and porous substance is sawdust, which will allow the formation of a spongy air-permeable mixture, jointly with one or several sponging agents, that will lead to the essential advantage of facilitating the process of aerobic digestion of the organic material of the treated purines. On the other hand, given the apparent rheology and density of the air-permeable spongy mixture, the method allows the piling up of the mixture uniformly in a treatment stand or module on farms with little space available.

In particular, a method is known that allows the first composting stage (decomposition and hygienisation) to be accelerated by means of the controlled injection of air through the mixture being composted at a low speed during intermittent time periods, which eliminates the need for the agitation of the mixture and, together with the recirculation of the active leachates, improves the implicit microbiological process significantly.

The method of the present invention is designed to treat purines and other types of excess cattle droppings in a determined agricultural-cattle region. Obviously, each case includes specific initial mixtures and a strategic operational process.

Briefly, the composting process has two very distinct characteristic stages:
- The first, fundamentally consisting of decomposition and hygienisation, is carried out innovatively and intensively according to the present invention in specialised modules in which air is distributed in an individual and controlled way *in situ,* with the use of complete purine in the mixture to be composted, without the previous separation of its solid fraction for its exclusive use, as is the case at present in conventional treatment plants; and
- The second, consisting of maturation, is carried out on a small-scale in order to obtain high quality products.

The process gives as a result well hygienised composts, with a high level of stability and with very interesting formulations in organic material, phytochemicals and humic content. These composts could be sold directly, could be placed in high quality organo-mineral fertiliser manufacturing lines, and could even be placed in very specific products for vegetable cultivation.

### BRIEF DESCRIPTION OF THE DRAWINGS

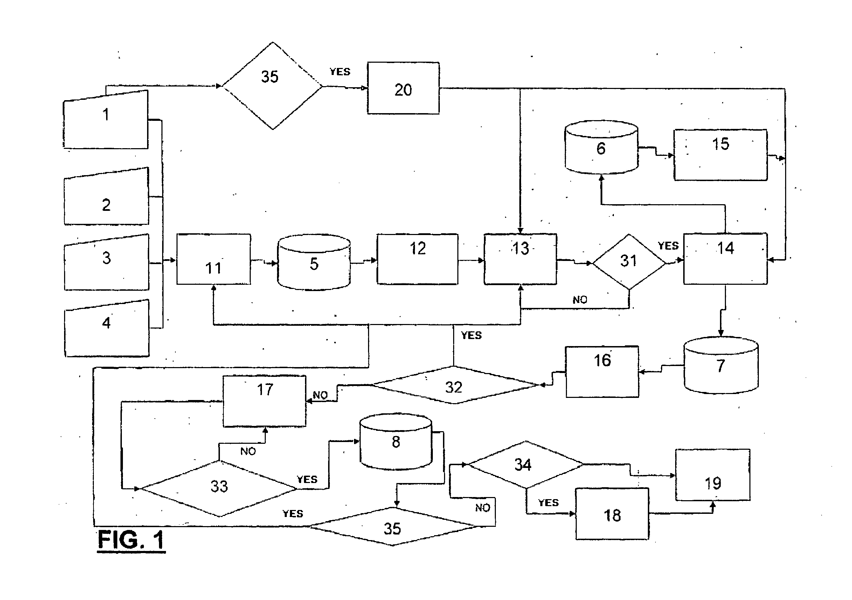

In the following, a description is given of the preferred unexclusive embodiments of the present invention, for which drawings that are to be considered as non-limitative examples are included to aid comprehension, the only Figure (Fig. 1) of said drawings being a block diagram illustrating the beginning of operation and the process material flows according to the present invention.

### DESCRIPTION OF A PREFERRED EMBODIMENT

In Fig. 1 different types of blocks are represented that represent processes, materials and steps of the process, with the following conventions with respect to the general meaning of each type:

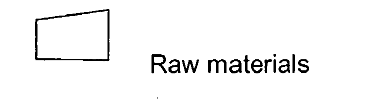

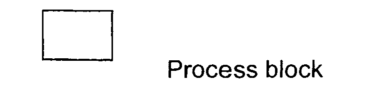

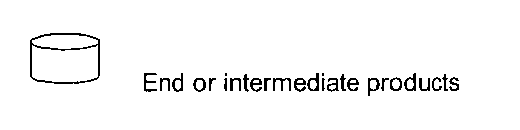

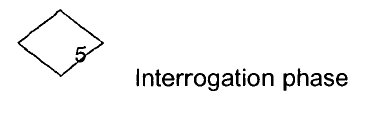

In said Fig. 1, the raw materials and the end or intermediate products have been referenced with single figure numbers; the process blocks have been referenced with two figure numbers, "1" being the first of them; and the interrogation phase blocks have been referenced with two figure numbers, "3" being the first of them. The latter is given for greater clarity in the description and comprehension of the description.

In said Fig. 1, it is possible to see that in the compost production method, the process begins with purines 1, manure 2, absorbent materials 3 such as sawdust, and sponging materials (or bulking) 4, such as straw, for example. In addition to those mentioned, grass, paper, garden waste, etc can be used as absorbent and/or compacting materials.

The preferred purine:sawdust ratio is comprised between 6:1 and 20:1 and, optimally is 8:1 to 10:1.

Essentially, the purine 1 is mixed *in situ* at the cattle farm itself, with two or several of the products mentioned: manure 2, hygroscopic and porous substances 3, and sponging agent 4. A mixture 5 is obtained to be composted from the mixing process 11 that is spongy and air-permeable.

Subsequently, this mixture to be composted 5 is placed in a composting pile 12 inside the composting module, that is possibly "arranged" in 13 according to certain criteria concerning height extension, final shape and accessory components (biofilter), etc, that are interrogated and checked in one step 31. When the pile 12 is conveniently arranged, the controlled injection of air begins and thus the composting process intensively starts its first phase 14, namely the decomposition and hygienisation phase.

It is important to highlight at this point that the composting process is carried out individually for batch quantities of surplus purine from cattle farming, *in situ* at the cattle farm itself, with the purine in a liquid state without previous fraction separation.

According to the invention, composting comprises the acceleration of the first aerobic composting phase in the processing module 14, by means of the controlled injection of air through the air-permeable and spongy mixture being composted. In terms of their constitution and basic functionality, these modules can be of the type disclosed in European patent EP 1.266.880. In this case, the elementary composting module is made up of a concrete canal with open ends. Ducts running along the base penetrate the interior of the canal by means of longitudinal through openings, from which air circulating towards the interior of the canal is released.

Beyond that described in this document, in the composting module of the present invention the product in progress is covered with a layer of biological filter. The biological filter includes the first phase compost or "pre-compost" 7 or the matured product 8 or end product, with an active bacterial content. This active biofilter retains a good proportion of volatile substances that would otherwise be emitted into the atmosphere. The objective of the bacteria is to degrade and metabolise an entire set of molecules that produce unpleasant odours.

According to the invention, the mixture to be composted and the upper biofilter are covered with a Teflon®-treated water-impermeable polyester awning that allows the transpiration of the water vapour from the process that, in addition to protecting the material in progress from bad weather, acts as a second high-powered filter to prevent the emission of potentially contaminant volatile substances into the atmosphere.

The injection of air is controlled by computer programmable means, adapted to act on the airflow and comprise the use of temperature sensors connected to said computer means.

Furthermore, the composting temperature of the mixture in the composting module 14 is also controlled.

A hygienised pre-compost 7 is thus obtained from the process module 14 and, according to the specific process, from a leachate 6 such as leachate sediment.

The leachate 6 that is obtained is recirculated in 15 to the composting module 14, so that part of it or, if this is the case, all of it is assimilated by the process 14 to obtain the hygienised pre-compost 7.

Subsequently, the module of this first composting phase 14 is emptied 16 at a maturation station 17 of the hygienised pre-compost 7, in order to carry out the second phase of the composting process.

Then, the hygienised pre-compost 7 is matured and controlled in 17, during a pre-determined period of time in order to obtain a matured compost 8 or end product.

In Fig. 1 it is possible to observe that the purine 1 can also be fed directly without mixing, in the case that it lacks liquid (according to the interrogation 35), to the composting pile 13 or to the composting module 14, after grinding 20. This guarantees that the decomposition stage of the composting in 14 is carried out with a suitable mixture humidity level.

An interrogation is carried out in 32 to determine whether a recirculation step of a part of the hygienised pre-compost 7 in the mixing process 11 and/or in the composting pile 13 upstream of the composting module 14 would be useful. If the response is affirmative, then this recirculation is carried out. With this method it is possible to obtain in 11, according to that understood by experts in the field, a reinoculation and regulation of the desired characteristics in the obtainment of the hygienised pre-compost 7 itself. Likewise, it is possible proceed with the construction in 13 of a biofilter for the retention of volatile substances, thus preventing them from passing into the atmosphere.

If the response in 32 is negative, then controlled maturation 17 of the hygienised pre-compost 7 is carried out. This maturation phase 17 is carried out on a small-scale, with an unrestrictive time duration, which is necessary to obtain a product qualitatively suitable for use. When the maturation process in the pile is complete (interrogation in 33), the matured compost 8, or end product is obtained from it.

A recirculation step of the matured compost 8 (interrogation in 35) to the mixing process and/or to the composting pile 13 upstream of the composting module 14 may possibly be applied. With this recirculation of the final matured compost 8, according to that understood by the experts in the field, a reinoculation and regulation effect on the characteristics of the final compost 8 itself is obtained in 11. Likewise, it is possible to proceed with the construction in 13 of a biofilter for the retention of volatile substances, thus preventing them from passing into the atmosphere.

The different phases of the method are carried out according to a batch process 6, in such a way that, while one batch is in the maturation process 17, the following is in the decomposition and hygienisation process 14.

Finally, the matured compost 8 is transported 19 to an organic fertilizer manufacturing plant, previously sifted 18 according to the interrogation response 34.

The data implicit in the process can be monitored and controlled remotely.

In the following, some real specific examples are disclosed, that illustrate the invention with greater accuracy with respect to its execution and to the obtainable yields, in relation to both composting standards.

### Example 1: Pig Purine Composting -

**Composting module** (decomposition stage): module of 4 elements (10 m in length).

**Raw materials:**
- fattened pig purine (with high total solid content: 75 - 95 g/kg; density close to 1 g/cm³),
- sawdust (density close to 0.11 g/cm³),
- cereal straw (wheat or barley; density close to 0.2 g/cm³).

**Global composition of the mixture to be composted** (mass ratios for the mixture in the different filling batches of the module are placed at 10:1.25, respectively for the raw materials purine, straw and sawdust.):
- fattened purine: 30 tons (some 30 m3),
- sawdust: 3.75 tons (some 34.1 m3),
- cereal straw: 3 tons (some 15 m3).

Batch mixture: 36.75 tons of a spongy mixture to be composted are obtained that yields some 82 m³ of batch material, with an apparent density of approximately 0.45 g/cm³ and a humidity of approximately 75 %.

**Decomposition and hygienisation stage:** it develops in temperatures that are situated, except at the start (from 24 - 48 hours, normally) and in the final decay (from 48 - 72 hours, normally), within the region of 60 to 75 °C.

**Pre-compost and leachates.** The products of the decomposition and hygienisation stage carried out in the intensive composting module are:
- some 18 tons of "pre-compost" that, with a humidity of 45 to 55% and an approximate density (without sponging) of 0.7 g/cm3, occupy some 26 m³,
- from 0 to 5 m³ of leachates (with a high humic content), that are obtained optionally if they are considered useful as liquid fertilizer to be sold or as a strategy to reduce the final humidity of the compost.

This stage of the process presents, comparing the pre-compost that is obtained with the batch material, a mass yield close to 50 %.

**Maturation stage:** it is developed in temperatures that are situated, except at the beginning (24 - 48 hours) and in the final decay (48 - 72 hours), within the region of 35 to 50 °C.

**Final compost:** some 14-15 tons of final compost are obtained from the process that, with a humidity of 35 to 40 % and an apparent density close to 0.6 g/cm³, yields some 24 - 25 m3 of end product. This end product is not sifted and, therefore, the quantitative comparison with the initial mixture gives a mass yield of 40% and the volumetric analysis is situated at 30 %.

### Example 2 Pig Purine and Bovine Manure Composting

**Composting module** (decomposition stage): module of 4 elements (10 m in length).

**Raw materials:**
- fattened pig purine (with a high relative total solid content in: 75 - 95 g/kg; density close to 1g/cm3),
- bovine manure (with a total solid content close to 300 g/kg; approximate density of 0.8 g / cm³),
- sawdust (apparent density close to 0.11 g/cm³),
- cereal straw (wheat or barley; apparent density close to 0.2 g/cm³).

**Global composition of the mixture to be composted** (mass ratios for the mixture in the different filling batches of the module are placed at 20 : 20: 1: 1, respectively for the raw materials purine, manure and straw and sawdust):
- fattened purine: 20 tons (some 20 m³),
- bovine manure: 20 tons (some 25 m³),
- sawdust: I ton (some 9.1 m³),
- cereal straw: I ton (some 5 m³).

**Batch mixture:** 42 tons of a spongy mixture to be composted are obtained that yields some 84 m³ of batch material, with an approximate apparent density of 0.5 g/cm³ and an approximate humidity of 78%.

**Decomposition and hygienisation stage:** it is developed in temperatures that are situated, except at the start (from 24 - 48 hours, normally) and in the final decay (from 48 - 72 hours, normally), within the region of 55 to 75 °C.

**Pre-compost and leachates.** The products of the decomposition and hygienisation stage carried out in the intensive composting module are:
- some 21 tons of "pre-compost" that, with a humidity of 45 to 55% and an approximate density (without sponging) of 0.7 g/cm³, occupy some 30 m³,
- from 0 to 8 m³ of leachates (with a high humic content), that are obtained optionally if they are considered useful as liquid fertilizer to be sold or as a strategy to reduce the final humidity of the compost.

This stage of the process presents, comparing the pre-compost that is obtained with the batch material, a mass yield close to 50 %.

**Maturation stage:** it is developed in temperatures that are situated, except at the start (24 - 48 hours) and in the final decay (48 - 72 hours), within a region of 35 to 50 °C.

**Final compost:** some 16-17 tons of final compost are obtained from the process that, with a humidity of 35 to 40 % and an apparent density close to 0.6 g/cm³, yield some 26 - 28 m³ of end product. This end product is not normally sifted and, therefore, the quantitative comparison with the initial mixture gives a mass yield of 38 - 40 % and the volumetric analysis is situated from 30 to 33 %.

## Claims

1. Compost production method, made from residual purines (1) and other animals droppings (2) from cattle farms, that includes an aerobic microbiological decomposition process of the organic material of the purines and manure in an intensive composting module (14) in, among other compounds, CO₂, water vapour and mineral salts, **characterised in that** it includes the phases of
mixing (11) the purines (1) with one or several of the following products: manure (2), hygroscopic and porous substances (3), and a sponging agent (4), to obtain a spongy air-permeable mixture (5).
arranging the mixture (5) obtained in a composting pile (12) constructed in the interior of an intensive composting module (14);
in the decomposition and hygienisation phase, composting the mixture intensively in the composting module, with the production of a hygienised pre-compost (7) and a leachate (6);
recirculating (15) all or part of the leachate (6) to the composting module (14);
emptying the composting module at a maturation station (17);
maturing and controlling the hygienised pre-compost for a pre-determined period of time in order to obtain a matured compost (8) or end product.

2. Compost production method, according to claim 1, **characterised in that** the mixing step (11) is carried out *in situ* on the cattle farm itself.

3. Compost production method, according to claim 1 or 2, composting comprising the acceleration of decomposition microbiological activity in said intensive composting module.

4. Compost production method, according to claim 3, **characterised in that** the acceleration is carried out by means of the controlled injection of air through the spongy air-permeable mixture being composted.

5. Compost production method, according to claim 4, **characterised in that** it includes covering the product in progress in the composting module with a layer of biological filter.

6. Compost production method, according to claim 5, **characterised in that** said biological filter includes bacteria, that serve to degrade and metabolise an entire set of molecules that produce unpleasant odours.

7. Compost production method, according to claim 5 or 6, **characterised in that** said biological filter includes the hygienised pre-compost (7).

8. Compost production method, according to claim 5, 6 or 7, **characterised in that** said biological filter includes the matured compost (8) or end product.

9. Compost production method, according to any of claims 4 to 8, **characterised in that** it comprises the covering of the product in progress and the layer of biological filter in the composting module (14) with a polyester awning that has bee treated so that it is water-impermeable and allows the transpiration, at the same time, of the water vapour from the process.

10. Compost production method, according to any of claims 4 to 9, **characterised in that** the injection of air is controlled by computer programmable means, adapted to act on the airflow, and it comprises the use of sensors connected to said computer means.

11. Compost production method, according to any of the previous claims, **characterised in that** it comprises the control of the composting temperature of the mixture in the composting module (14).

12. Compost production method, according to any of the previous claims, **characterised in that** it comprises a recirculation step of the hygienised pre-compost (7) of leachate sediments from the composting module to the composting pile (13) upstream of the composting module (14).

13. Compost production method, according to any of the previous claims, **characterised in that** it comprises a recirculation step of the matured compost (8) or end product to the composting pile upstream of the composting module.

14. Compost production method, according to any of the previous claims, **characterised in that** the phases of the method are carried out, at least partially, continuously.

15. Compost production method, according to any of claims 1 to 13, **characterised in that** the phases of the process are carried out according to a batch process.

16. Compost production method, according to any of the previous claims, **characterised in that** said hygroscopic and porous substance (3) includes sawdust.

17. Compost production method, according to claim 16, **characterised in that** the mixture is carried out in a purine:sawdust mass ratio comprised between 6:1 and 20:1.

18. Compost production method, according to claim 17, **characterised in that** mixture is carried out in a purine:sawdust mass ratio preferably between 8:1 and 10:1.

19. Compost production method, according to any of the previous claims, **characterised in that** it comprises the sifting (18) of the matured compost (8) or end product, according to the desired final characteristics.

20. Compost production method, according to any of the previous claims, **characterised in that** it comprises the transportation of the matured compost or end product to an organic fertilizer product manufacturing plant.

21. Compost production method, according to any of the previous claims, **characterised in that** the data implicit in the intensive stage of the process (decomposition and hygienisation stage) is monitored and controlled remotely.
